(19) Europäisches Patentamt

European Patent Office

Office européen des brevets

(11) **EP 1 039 668 A2**

(12) **EUROPÄISCHE PATENTANMELDUNG**

(43) Veröffentlichungstag:
27.09.2000 Patentblatt 2000/39

(51) Int Cl.⁷: **H04J 3/04**

(21) Anmeldenummer: 00440042.0

(22) Anmeldetag: **09.02.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **19.03.1999 DE 19912379**

(71) Anmelder: **ALCATEL**
**75008 Paris (FR)**

(72) Erfinder:
• **Krimmel, Heinz**
**70825 Korntal-Münchingen (DE)**

• **Kaiser, Norbert**
**71732 Tamm (DE)**
• **Tomsu, Marco**
**71254 Ditzingen (DE)**
• **Schaepperle, Joerg**
**70180 Stuttgart (DE)**

(74) Vertreter: **Müller, Joachim, Dipl.-Ing. et al**
**Alcatel**
**Intellectual Property Department, Stuttgart**
**Postfach 30 09 29**
**70449 Stuttgart (DE)**

(54) **Verfahren und Schaltungsanordnung zur Konzentration von analogen Signalen zu einem digitalen Datenstrom in einem Breitbandübertragungssystem**

(57)    In modernen Breitbandübertragungssystemen, die Übertragungsstrecken aus Koaxialkabeln und Lichtwellenleitern enthalten, sog. Hybrid Fiber Coax Networks, ist es erforderlich, zur Verkehrskonzentration Signale und Datenströme zusammenzufassen, um die Kapazitäten der Übertragungswege besser ausnutzen zu können. Dazu ist es bekannt, Signale im analogen Bereich zu addieren und dazu die Addierer hierarchisch zu organisieren. Für die zur Signaldegradationsreduktion digitalisierten Verarbeitung wird, um die Probleme bei der Synchronisation zu umgehen, eine A/D-Wandler-Addierer-Kombination als Grundschaltung beschrieben, die zu einer Kettenschaltung zusammengeschaltet werden kann, wobei der Abtasttakt und das Synchronisiersignal jeweils aus der am Ausgang der vorangehenden Grundschaltung zur Verfügung stehenden Summe aus Datenströmen abgeleitet wird, so daß sich das Synchronisiersignal von Grundschaltung zu Grundschaltung innerhalb der Kette fortpflanzt und sich somit die Anforderungen an die Synchronisierung der Datenströme im Vergleich zum Stand der Technik wesentlich verringern.

Fig.2

**Beschreibung**

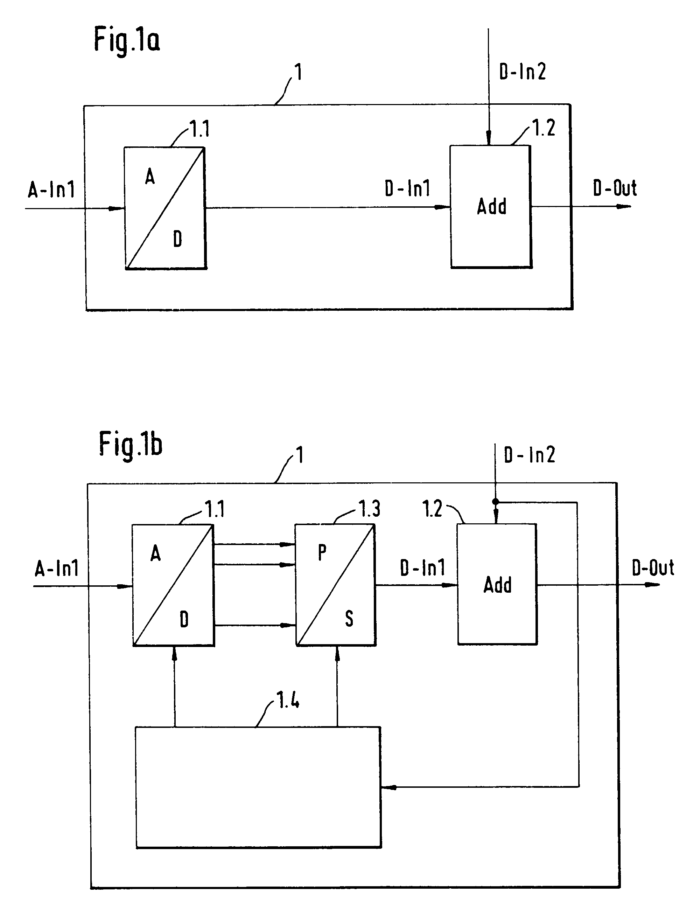

Die Erfindung betrifft ein Verfahren und eine Schaltungsanordnung zur Konzentration von analogen Signalen, die von unterschiedlichen Nachrichtenquellen herrühren, in einem breitbandigen Übertragungskanal, wie sie beispielsweise im Rückkanal eines Übertragungsnetzwerks aus Koaxialkabeln und Lichtwellenleitern (engl. Hybrid Fiber Coax (HFC) Network) erforderlich sind. Derartige Netzwerke dienen dazu, einem Teilnehmer außer dem bisher üblichen Kabelfernsehempfang auch Telefonübertragung, Datenübertragung, digitales Fernsehen und Informationsmanagementfunktionen über das Fernsehkabel zu ermöglichen. Um die Übertragungskapazitäten von Lichtwellenleitern insbesondere bei der Überbrückung größerer Entfernungen wirkungsvoll ausnutzen zu können, ist eine Konzentration der von den einzelnen Teilnehmeranschlüssen herrührenden Signale zu einem gemeinsamen Datenstrom erforderlich. Es ist allgemein bekannt, im einfachsten Fall dazu jeweils zwei Signale im analogen Bereich zu addieren und die Addierer stufenweise hierarchisch zu organisieren. Nachteilig bei einer solchen analogen Anordnung sind die Signalverzerrungen, die den Signalen hinzugefügt werden und zu einer Akkumulation von Störungen führen, so daß der Einsatz einer solchen Anordnung insbesondere bei höheren Frequenzen nachteilig ist. Um diese Nachteile zu umgehen, ist es zunächst vorgesehen die analogen Signale vor der Addition mit einem Analog/Digital-Wandler, kurz: A/D-Wandler, in ein digitales Signal zu wandeln, vgl. Fig. 1. Somit wird zwar eine Verringerung der Störeinflüsse erreicht, allerdings ist auch eine Synchronisation aller digitalen Datenströme bitgenau und bytegenau für die Addition erforderlich. Werden bei einer Vielzahl von verteilten Einrichtungen digitale Datenströme beispielsweise für Trägerfrequenzen im Frequenzbereich f = 5 MHz ... 65 MHz und daraus folgend eine Abtastfrequenz für die A/D-Wandler von $f_A$ = 130 MHz ... 155 MHz verwendet, so ist die Synchronisation der Datenströme durch Laufzeitunterschiede, bedingt durch die verteilte Anordnung der Einrichtungen, erheblich erschwert. Der Einsatz von aufwendigen FIFO-(first in - first out) Speichern ist in diesem Fall kaum zu vermeiden.

Mit der Erfindung wird nun die Aufgabe gelöst, ein Verfahren und eine Schaltungsanordnung anzugeben, mit denen eine Konzentration von Signalen, die von örtlich verteilt angeordneten Nachrichtenquellen herrühren, in Netzwerken mit hohen Abtastfrequenzen, beispielsweise größer als 100 MHz, und mit großen Übertragungsgeschwindigkeiten, beispielsweise 2,5 Gbit/s, mit geringem schaltungstechnischen Aufwand ermöglicht wird.

Diese Aufgabe wird mit dem im ersten Anspruch beschriebenen Verfahren und mit der im fünften Anspruch beschriebenen Schaltungsanordnung gelöst.

Das Wesen der Erfindung besteht darin, daß für die Konzentration der Signale eine völlig neue Schaltungsstruktur zur Konzentration der sie darstellenden Datenströme angegeben wird, die aus einer Kette gleicher Grundschaltungen besteht, daß jede Grundschaltung einen A/D-Wandler und einen digitalen Addierer enthält und daß ein Abtasttakt und ein Synchronisiersignal von Grundschaltung zu Grundschaltung in der Kette geführt wird und damit die Anforderungen an eine externe, verteilte Synchronisationsschaltung, beispielsweise an deren Taktgenauigkeit, im Vergleich zum bekannten Stand der Technik wesentlich verringert werden. Der einfache Schaltungsaufbau ist besonders günstig mit ultraschnellen hochintegrierten Schaltungen in Silizium-Germanium-Technologie realisierbar und vorteilhaft in HFC-Netzen einsetzbar.

Die Erfindung wird nunmehr an einem Ausführungsbeispiel näher erläutert. In der dazugehörigen Zeichnung zeigen

Fig.1a, 1b     ein Blockschaltbild einer Grundschaltung aus A/D-Wandler und digitalem Addierer,

Fig. 2          eine erfindungsgemäße Schaltungsanordnung zur Konzentration von Datenströmen,

Fig. 3          eine erste Variante der erfindungsgemäßen Schaltungsanordnung und

Fig. 4          eine zweite Variante der erfindungsgemäßen Schaltungsanordnung.

Gemäß Fig. 1a besteht die Grundschaltung 1 für die Konzentration von Datenströmen im wesentlichen aus einem A/D-Wandler 1.1 und einem Addierer 1.2. Diese Grundschaltung hat einen ersten Eingang für ein in analoger Form vorliegendes Signal A-ln 1, kurz analoges Signal genannt, einem zweiten Eingang für einen in digitaler Form vorliegenden Datenstrom D-ln 2, kurz digitaler Datenstrom genannt, und einen Ausgang, an dem die Summe D-Out aus dem digital gewandelten analogen Signal D-ln 1 und dem am zweiten Eingang anliegenden digitalen Datenstrom D-ln 2 zur Verfügung gestellt wird.

Fig. 1b zeigt weitere Einzelheiten der Grundschaltung 1, nämlich zusätzlich zu den in Fig. 1a dargestellten Blöcken 1.1, 1.2 einen Parallel-Serie-Wandler 1.3 und eine Detektorschaltung 1.4 zur Detektion eines Synchronisiersignals und zur Erzeugung eines daraus abzuleitenden Taktsignals zur Abtastung des analogen Signals A-ln 1. Zur Wirkungsweise der Grundschaltung 1: Zunächst wird aus dem analogen Datenstrom A-ln 1 mit Hilfe des A/D-Wandlers 1.1 ein in paralleler Form vorliegender Datenstrom erzeugt, der mittels des Parallel-Serie -Wandlers 1.3 in einen seriellen digitalen Datenstrom D-ln 1 gewandelt wird. Dieser digitale Datenstrom D-ln 1 liegt an einem ersten Eingang des Addierers 1.2, an dessen zweiten Eingang ein weiterer digitaler Datenstrom D-ln 2 liegt. Beide digitale Datenströme D-ln 1, D-ln 2 enthalten eine Folge von Datenworten. Diese werden digital addiert und bilden als Summe D-Out das Ausgangssignal der Grundschaltung. Aus dem am zweiten Eingang des Addierers liegenden Datenstrom D-ln 2, wird mit Hilfe der Detektorschaltung 1.4 der jeweilige Wortstart und daraus der Abtasttakt für den A/D-Wandler 1.1 ermittelt, sowie das Synchronisiersignal für den Addierer 1.2 derart gebildet, daß die entsprechenden wertniedrigsten und werthöchsten Bits der zu addierenden Worte der Datenströme jeweils zeitsynchron dem Addierer 1.2 zugeführt werden. Es ist zweckmäßig, die Anzahl der Eingänge des Parallel-Serie-Wandlers 1.3 größer als die Anzahl der Ausgänge des A/D-Wandlers 1.1 zu wählen, um somit einen Eingang des Parallel-Serie-Wandlers 1.3 für die Zuführung des Synchronisiersignals verwenden zu können, und um im seriellen Datenstrom einen weiteren Eingang für das Überlauf-Bit des Addierers 1.2 zu reservieren.

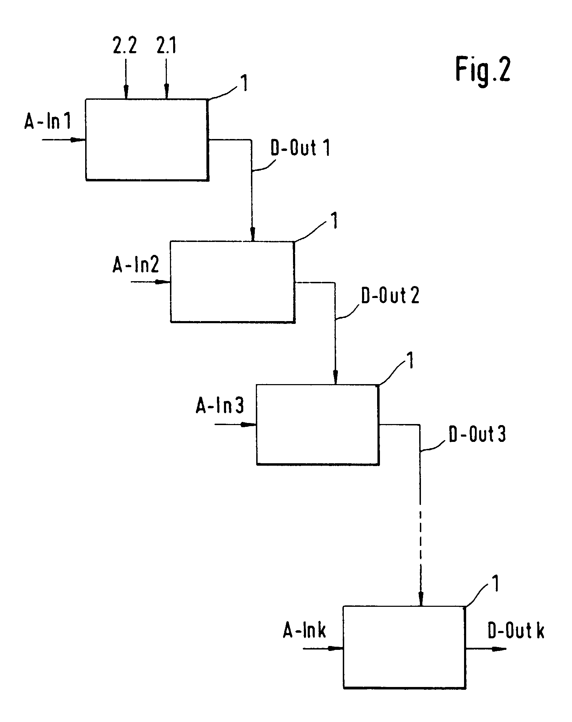

Fig. 2 zeigt eine A/D-Wandler/Addierer-Schaltung aus einer Anzahl k Grundschaltungen 1 mit jeweils einem Eingang für ein analoges Signal A-ln 1 ... A-ln k und einem Ausgang für die Summe D-Out der digital gewandelten analogen Signale A-ln 1 ... A-ln k. Die kettenförmige Struktur der Schaltungsanordnung zeichnet sich dadurch aus, daß aus der Summe der Datenströme auch das Synchronisiersignal für die in der Kette folgende Grundschaltung 1 wiedergewonnen wird, so daß sich die zur Synchronisation notwendige Information in der Kettenschaltung von Grundschaltung 1 zu Grundschaltung 1 ausbreitet, ohne daß ein separates Synchronisiersignal übertragen werden muß, und somit im Vergleich zum bekannten Stand der Technik die Synchronisation wesentlich erleichtert wird. Obwohl jede Grundschaltung 1 der A/D-Wandler/Addierer-Schaltung örtlich unterschiedlich, beispielsweise in unterschiedlichen Stockwerken eines Gebäudes, angeordnet sein kann, sind keine zusätzlichen Schaltungen zum Ausgleich auftretender Laufzeitunterschiede erforderlich. Eine serielle Übertragung der Datenströme mit hohen Übertragungsgeschwindigkeiten ist möglich, da zur Realisierung der A/D-Wandler/Addierer-Schaltung Halbleiterschaltungen in Si-Ge-Technik eingesetzt werden, wodurch vorteilhafterweise der Leistungsbedarf verringert wird im Vergleich zu bekannten parallel arbeitenden CMOS-Schaltungen, deren Komplexität größer und deren Verarbeitungsgeschwindigkeit geringer ist und eine kostengünstige Realisierung als anwenderspezifischer Schaltkreis, engl. ASIC, Application Specific Integrated Circuit, möglich wird.

Gemäß Fig. 2 wird in der ersten Grundschaltung der A/D-Wandler/Addierer-Schaltung nur eine A/D-Wandlung des ersten analogen Signals A-ln 1 vorgenommen. Der zweite Dateneingang 2.1 des Addierers enthält eine Null-Information, das Synchronisiersignal und der Abtasttakt wird über einen Anschluß 2.2 der ersten Grundschaltung zugeführt. Am Ausgang der ersten Grundschaltung wird das digital gewandelte erste analoge Signal A-ln 1 als Summe D-Out 1 zur Verfügung gestellt und der nun folgenden Grundschaltung als ein Summand zugeführt, so daß symbolisch dargestellt folgende Operationen durchgeführt werden:

$$D(\text{A-ln 1}) + 0 = \text{D-Out 1}$$

$$D(\text{A-ln 2}) + \text{D-Out 1} = \text{D-Out 2}$$

und in der nächstfolgenden Stufe

$$D(\text{A-ln 3}) + \text{D-Out 2} = \text{D-Out 3}$$

und allgemein

$$D(\text{A-ln k}) + \text{D-Out (k-1)} = \text{D-Out k}$$

Wird der zweite Summand jeweils durch die Eingangssignale der vorangegangenen A/D-Wandler/Addierer-Schaltungen ersetzt, ergibt sich D (A-ln k) + ... + D (A-ln 3) + D (A-ln 2) + D(A-ln 1) = D-Out k wobei mit D (A-ln k) die analog/digital gewandelten Eingangssignale bezeichnet werden.

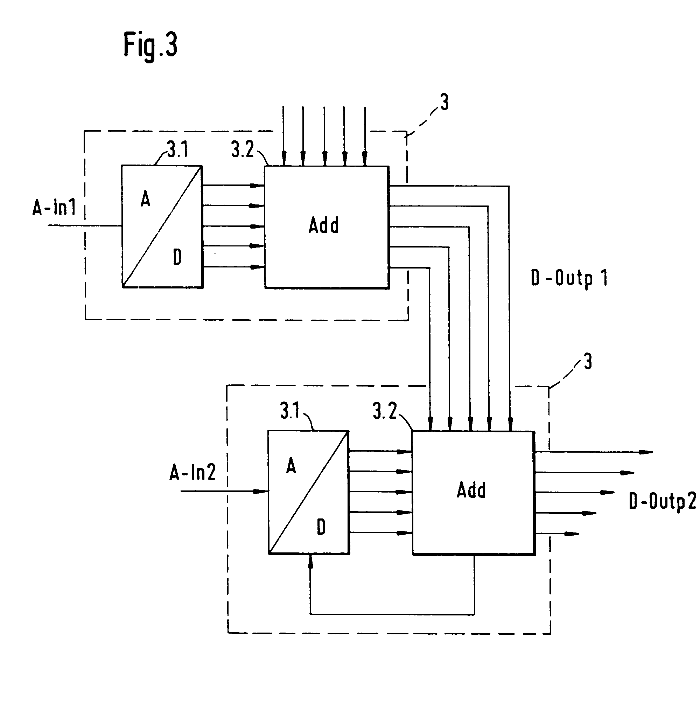

Fig. 3 zeigt eine Variante der A/D-Wandler/Addierer-Schaltung mit zwei hier dargestellten Grundschaltungen 3 aus einem A/D-Wandler 3.1 und einem Addierer 3.2. Gemäß Fig. 3 ist es möglich, die in Fig. 2 dargestellte Schaltungsstruktur auch dann zu verwenden, wenn die Verarbeitung der Datenströme nicht seriell sondern in paralleler Form erfolgt. Die am Ausgang der ersten Grundschaltung liegende Summe D-Outp 1 wird als Parallelinformation der zweiten Grundschaltung zugeführt und dort zu dem analog/digital gewandelten Datenstrom A-ln 2 addiert.

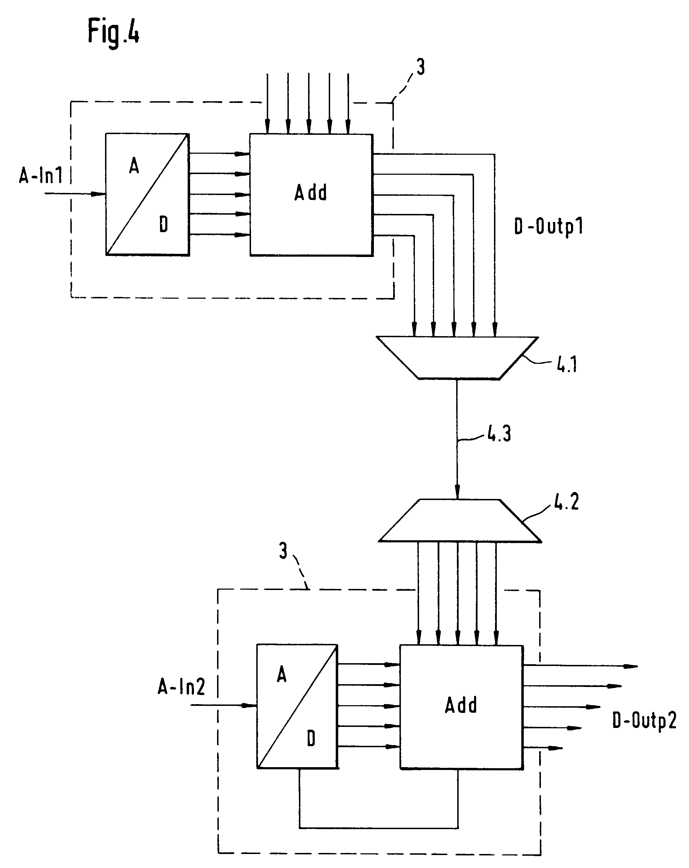

Soll die Übertragung des Datenstromes von einer Grundschaltung zu der in der Kette nächstfolgenden Grundschaltung über eine Leitung 4.3 seriell erfolgen, so ist es möglich, wie in Fig. 4 dargestellt, einen Multiplexer 4.1 und einen Demultiplexer 4.2 in der Übertragungsstrecke von Grundschaltung zu Grundschaltung einzusetzen.

Erfindungsgemäß wird eine A/D-Wandler/Addierer-Schaltung beschrieben, die vorteilhafterweise in HFC-Netzen zur kombinierten Analog/Digital-Wandlung und Konzentration von Signalen und damit zur effizienteren Ausnutzung von Übertragungswegen geeignet ist. Durch Hinzufügen eines opto-elektrischen Wandlers oder eines elektro-optischen Wandlers zu der A/D-Wandler/Addierer-Schaltung lassen sich kostengünstige anwenderspezifische Schaltkreise für einen universellen Einsatz in Breitbandübertragungssystemen realisieren.

**Patentansprüche**

1. Verfahren zur Konzentration von Datenströmen in einem Breitbandübertragungssystem mit einer Grundschaltung (1) aus einem Analog/Digital-Wandler (1.1) und einem diesem nachgeschalteten Addierer (1.2),
**dadurch gekennzeichnet, daß**
einem ersten Eingang der Grundschaltung (1) ein analoges Signal (A-ln k) zugeführt wird, daß einem zweiten Eingang der Grundschaltung (1) ein digitaler Datenstrom (D-ln (k-1)) zugeführt wird und daß an dem Ausgang der Grundschaltung (1) eine Summe (D-Out k) aus dem digital gewandelten analogen Signal (D-ln k) und dem digitalen Datenstrom (D-In (k-1)) bereitgestellt wird, wobei aus dem digitalen Datenstrom (D-In (k-1)) mit Hilfe einer Detektorschaltung (1.4) ein Abtasttakt und ein Synchronisiersignal derart abgeleitet werden, daß entsprechend gleichwertige Bits des digital gewandelten analogen Signals (D-ln k) und des digitalen Datenstroms (D-In (k-1)) synchron dem Addierer (1.2) zugeführt werden, und daß die Summe (D-Out k) der Datenströme bedarfsweise für eine weitere Addition dem zweiten Eingang einer in einer Kettenschaltung nächstfolgenden Grundschaltung (1) zugeführt wird.

2. Verfahren nach Anspruch 1 dadurch gekennzeichnet, daß durch die Zusammenschaltung jeweils des Ausgangs einer Grundschaltung (1) mit dem zweiten Eingang einer weiteren Grundschaltung (1) eine Kettenschaltung gebildet wird, bei der den ersten Eingängen der Grundschaltung (1) die zu addierenden analogen Signale (A-ln k) zugeführt werden und daß an dem Ausgang der in der Kettenschaltung letzten Grundschaltung (1) die Summe (D-Out k) der zu addierenden analogen Signale (A-In k) als digitaler Datenstrom bereitgestellt wird.

3. Verfahren nach Anspruch 1, dadurch gekennzeichnet, daß der ausgangsseitige digitale Datenstrom des Analog/Digital-Wandlers (1.1) einem Parallel-Serie-Wandler (1.3) zugeführt wird, an dessen Ausgang ein serieller Datenstrom (D-ln k) entsteht und die Addition des ersten und des zweiten Datenstroms (D-ln k, D-ln (k-1)) in serieller Form erfolgt.

4. Verfahren nach Anspruch 1, dadurch gekennzeichnet, daß die Übertragung eines digitalen Datenstroms bit-parallel erfolgt.

5. Schaltungsanordnung zur Konzentration von Signalen, die von unterschiedlichen Nachrichtenquellen herrühren, in einem Breitbandübertragungssystem, bei dem eine Nachrichtenquelle mit einem ersten Eingang einer Grundschaltung (1) aus einem Analog/Digital-Wandler (1.1) mit nachgeschaltetem Addierer(1.2) verbunden ist, dadurch gekennzeichnet, daß eine Anzahl k+1 Grundschaltungen (1) derart in Kette geschaltet sind, daß der Ausgang einer ersten Grundschaltung (1) mit einem zweiten Eingang einer zweiten Grundschaltung (1) verbunden ist, deren erster Eingang mit einer Nachrichtenquelle verbunden ist und daß der Ausgang der zweiten Grundschaltung (2) mit einem zweiten Eingang einer dritten Grundschaltung (1) verbunden ist, deren erster Eingang mit einer Nachrichtenquelle verbunden ist und daß der Ausgang einer k-ten Grundschaltung (1) mit einem zweiten Eingang einer (k+1)-ten Grundschaltung (1) verbunden ist und daß in jeder Grundschaltung (1) dem Analog/Digital-Wandler (1.1) und dem Addierer (1.2) eine Detektorschaltung (1.4) zugeordnet ist, deren Eingang mit dem zweiten Eingang der Grundschaltung (1) verbunden ist.

## Fig.1a

A-In1

A / D  *1.1*

D-In1

D-In2

Add  *1.2*

D-Out

*1*

## Fig.1b

A-In1

A / D  *1.1*

P / S  *1.3*

D-In1

D-In2

Add  *1.2*

D-Out

*1.4*

*1*

Fig.2

# Fig.3

A-In1

3.1

A / D

3.2

Add

3

D-Outp 1

A-In2

3.1

A / D

3.2

Add

3

D-Outp2

## Fig.4

A-In1

A / D

Add

3

D-Outp1

4.1

4.3

4.2

3

A-In2

A / D

Add

D-Outp2